# EUROPEAN PATENT APPLICATION

(11) **EP 4 513 364 A1**
(43) Date of publication of application: **26.02.2025**
(21) Application number: 24189343.7
(22) Date of filing: 18.07.2024
(51) Int. Cl.: G06F 21/46

(54) **MANAGEMENT AND ENFORCEMENT OF PASSWORD POLICIES BASED ON REGULAR EXPRESSIONS AND DEVICE MANAGEMENT CAPABILITIES**

(30) Priority: 23.08.2023 US 202318454380
(71) Applicant: Nokia Solutions and Networks Oy, 02610 Espoo (FI)
(72) Inventor: RAJAMANICKAM, Thirumurthy, Cary, 27513 (US)
(74) Representative: Zinsinger, Norbert

(57) **Abstract**

Various example embodiments for supporting security for communication networks are presented herein. Various example embodiments may be configured to allow service providers of communication networks (e.g., Internet Service Providers (ISPs), Communication Service Providers (CSPs), or the like, as well as various combinations thereof) to support configuration and enforcement of password rules for customer devices of the communication networks (e.g., customer devices such as customer gateways and customer premises equipments (CPEs) supported by such customer gateways), using configurable regular expressions through a device management data model (e.g., a Broadband Forum (BBF) data model such as a TR-98 data model, a TR-181 data model, or the like, as well as various combinations thereof), for controlling passwords created for the customer devices of the communication networks through a device management interface (e.g., a Web Graphical User Interface (WebGUI) or the like).

## Description

### TECHNICAL FIELD

Various example embodiments relate generally to communication systems and, more particularly but not exclusively, to controlling creation of passwords used for securing access to devices in communication systems.

### BACKGROUND

Various communications technologies may be used to support communications in various types of communication systems.

### SUMMARY

In at least some example embodiments, an apparatus includes at least one processor and at least one memory including instructions which, when executed by the at least one processor, cause the apparatus at least to receive, by a customer device, a password policy including a set of password rules defined based on a respective set of regular expressions, receive, by the customer device, a request to set a password on the customer device, and determine, by the customer device based on evaluation of the password using the password policy, whether to set the password on the customer device. In at least some example embodiments, the password policy is received from a service provider network providing communication services for the customer device. In at least some example embodiments, the password policy is received based on a device management protocol. In at least some example embodiments, the device management protocol is based on TR-069 or TR-369. In at least some example embodiments, the password policy is received from a device management element. In at least some example embodiments, the device management element is an Automatic Configuration Server (ACS) or a User Services Platform (USP) element. In at least some example embodiments, the password policy is represented using a device management data model. In at least some example embodiments, the device management data model is a Broadband Forum data model. In at least some example embodiments, the Broadband Forum data model is a TR-98 data model or a TR-181 data model. In at least some example embodiments, the request to set the password on the customer device is received via a device management interface. In at least some example embodiments, the device management interface is a customer-facing device management interface. In at least some example embodiments, the device management interface is a WebGUI interface. In at least some example embodiments, the evaluation of the password using the password policy is based on a regular expression evaluation engine. In at least some example embodiments, the evaluation of the password using the password policy includes evaluation of the password with respect to each of the regular expressions to determine whether the password satisfies each of the password rules of the password policy. In at least some example embodiments, the instructions, when executed by the at least one processor, cause the apparatus at least to permit the password to be set on the customer device based on a determination that the password satisfies the password policy. In at least some example embodiments, the instructions, when executed by the at least one processor, cause the apparatus at least to prevent the password from being set on the customer device based on a determination that the password fails to satisfy the password policy. In at least some example embodiments, the customer device is a customer gateway device or a customer premises equipment device.

In at least some example embodiments, a non-transitory computer-readable medium stores computer program instructions which, when executed by an apparatus, cause the apparatus at least to receive, by a customer device, a password policy including a set of password rules defined based on a respective set of regular expressions, receive, by the customer device, a request to set a password on the customer device, and determine, by the customer device based on evaluation of the password using the password policy, whether to set the password on the customer device. In at least some example embodiments, the password policy is received from a service provider network providing communication services for the customer device. In at least some example embodiments, the password policy is received based on a device management protocol. In at least some example embodiments, the device management protocol is based on TR-069 or TR-369. In at least some example embodiments, the password policy is received from a device management element. In at least some example embodiments, the device management element is an Automatic Configuration Server (ACS) or a User Services Platform (USP) element. In at least some example embodiments, the password policy is represented using a device management data model. In at least some example embodiments, the device management data model is a Broadband Forum data model. In at least some example embodiments, the Broadband Forum data model is a TR-98 data model or a TR-181 data model. In at least some example embodiments, the request to set the password on the customer device is received via a device management interface. In at least some example embodiments, the device management interface is a customer-facing device management interface. In at least some example embodiments, the device management interface is a WebGUI interface. In at least some example embodiments, the evaluation of the password using the password policy is based on a regular expression evaluation engine. In at least some example embodiments, the evaluation of the password using the password policy includes evaluation of the password with respect to each of the regular expressions to determine whether the password satisfies each of the password rules of the password policy. In at least some example embodiments, the computer program instructions, when executed by the apparatus, cause the apparatus at least to permit the password to be set on the customer device based on a determination that the password satisfies the password policy. In at least some example embodiments, the computer program instructions, when executed by the apparatus, cause the apparatus at least to prevent the password from being set on the customer device based on a determination that the password fails to satisfy the password policy. In at least some example embodiments, the customer device is a customer gateway device or a customer premises equipment device.

In at least some example embodiments, a method includes receiving, by a customer device, a password policy including a set of password rules defined based on a respective set of regular expressions, receiving, by the customer device, a request to set a password on the customer device, and determining, by the customer device based on evaluation of the password using the password policy, whether to set the password on the customer device. In at least some example embodiments, the password policy is received from a service provider network providing communication services for the customer device. In at least some example embodiments, the password policy is received based on a device management protocol. In at least some example embodiments, the device management protocol is based on TR-069 or TR-369. In at least some example embodiments, the password policy is received from a device management element. In at least some example embodiments, the device management element is an Automatic Configuration Server (ACS) or a User Services Platform (USP) element. In at least some example embodiments, the password policy is represented using a device management data model. In at least some example embodiments, the device management data model is a Broadband Forum data model. In at least some example embodiments, the Broadband Forum data model is a TR-98 data model or a TR-181 data model. In at least some example embodiments, the request to set the password on the customer device is received via a device management interface. In at least some example embodiments, the device management interface is a customer-facing device management interface. In at least some example embodiments, the device management interface is a WebGUI interface. In at least some example embodiments, the evaluation of the password using the password policy is based on a regular expression evaluation engine. In at least some example embodiments, the evaluation of the password using the password policy includes evaluation of the password with respect to each of the regular expressions to determine whether the password satisfies each of the password rules of the password policy. In at least some example embodiments, the method includes permitting the password to be set on the customer device based on a determination that the password satisfies the password policy. In at least some example embodiments, the method includes preventing the password from being set on the customer device based on a determination that the password fails to satisfy the password policy. In at least some example embodiments, the customer device is a customer gateway device or a customer premises equipment device.

In at least some example embodiments, an apparatus includes means for receiving, by a customer device, a password policy including a set of password rules defined based on a respective set of regular expressions, means for receiving, by the customer device, a request to set a password on the customer device, and means for determining, by the customer device based on evaluation of the password using the password policy, whether to set the password on the customer device. In at least some example embodiments, the password policy is received from a service provider network providing communication services for the customer device. In at least some example embodiments, the password policy is received based on a device management protocol. In at least some example embodiments, the device management protocol is based on TR-069 or TR-369. In at least some example embodiments, the password policy is received from a device management element. In at least some example embodiments, the device management element is an Automatic Configuration Server (ACS) or a User Services Platform (USP) element. In at least some example embodiments, the password policy is represented using a device management data model. In at least some example embodiments, the device management data model is a Broadband Forum data model. In at least some example embodiments, the Broadband Forum data model is a TR-98 data model or a TR-181 data model. In at least some example embodiments, the request to set the password on the customer device is received via a device management interface. In at least some example embodiments, the device management interface is a customer-facing device management interface. In at least some example embodiments, the device management interface is a WebGUI interface. In at least some example embodiments, the evaluation of the password using the password policy is based on a regular expression evaluation engine. In at least some example embodiments, the evaluation of the password using the password policy includes evaluation of the password with respect to each of the regular expressions to determine whether the password satisfies each of the password rules of the password policy. In at least some example embodiments, the apparatus includes means for permitting the password to be set on the customer device based on a determination that the password satisfies the password policy. In at least some example embodiments, the apparatus includes means for preventing the password from being set on the customer device based on a determination that the password fails to satisfy the password policy. In at least some example embodiments, the customer device is a customer gateway device or a customer premises equipment device.

In at least some example embodiments, an apparatus includes at least one processor and at least one memory including instructions which, when executed by the at least one processor, cause the apparatus at least to receive, by a device management element, a password policy represented using a device management data model, wherein the password policy includes a set of password rules defined using a respective set of regular expressions and send, by the device management element toward a customer device based on a device management protocol associated with the device management data model, the password policy.

In at least some example embodiments, a non-transitory computer-readable medium stores computer program instructions which, when executed by an apparatus, cause the apparatus at least to receive, by a device management element, a password policy represented using a device management data model, wherein the password policy includes a set of password rules defined using a respective set of regular expressions and send, by the device management element toward a customer device based on a device management protocol associated with the device management data model, the password policy.

In at least some example embodiments, a method includes receiving, by a device management element, a password policy represented using a device management data model, wherein the password policy includes a set of password rules defined using a respective set of regular expressions and sending, by the device management element toward a customer device based on a device management protocol associated with the device management data model, the password policy.

In at least some example embodiments, an apparatus includes means for receiving, by a device management element, a password policy represented using a device management data model, wherein the password policy includes a set of password rules defined using a respective set of regular expressions and means for sending, by the device management element toward a customer device based on a device management protocol associated with the device management data model, the password policy.

### BRIEF DESCRIPTION OF THE DRAWINGS

The teachings herein can be readily understood by considering the following detailed description in conjunction with the accompanying drawings, in which:
FIG. 1 depicts an example embodiment of a communication system configured to support management and enforcement of password policies, for controlling passwords of customer devices, based on use of regular expressions and device management capabilities;
FIG. 2 depicts an example embodiment of modeling of a password policy, using a data model, for supporting management and enforcement of the password policy for use in controlling passwords of customer devices;
FIG. 3 depicts an example embodiment of a method for use by a device management element of a service provider network to support management and enforcement of a password policy, for controlling passwords of customer devices, based on use of regular expressions and device management capabilities;
FIG. 4 depicts an example embodiment of a method for use by a customer device of a customer network to support management and enforcement of a password policy, for controlling passwords for the customer device, based on use of regular expressions and device management capabilities; and
FIG. 5 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

Various example embodiments for supporting security for a communication network are presented herein. The security for a communication network may be provided by securing access to customer devices associated with the communication network. The securing of access to the customer devices associated with the communication network may be based on use of passwords created by customers for the customer devices to control access to the customer devices. The securing of access to the customer devices based on use of passwords created by customers for the customer devices may be provided by supporting management and enforcement of password policies which control creation of the passwords by the customers for the customer devices. The securing of access to the customer devices based on use of passwords created by customers for the customer devices may be provided by enabling service providers of communication networks, which provide communication services to the customer devices, to support management and enforcement of password policies which control creation of the passwords by the customers for the customer devices. The support for management and enforcement of password policies which control creation of the passwords by the customers for the customer devices may be based on use of regular expressions to define the password policies and based on use of device management capabilities for managing the password policies (e.g., based on use of device management data models for representing the password policies and based on use of device management protocols for configuring the password policies on the customer devices). The support for management and enforcement of password policies which control creation of the passwords by the customers for the customer devices may be configured to support management and enforcement of password policies independent of the customer device management interfaces used by the customers to create passwords for the customer devices. It will be appreciated that these and various other example embodiments for supporting management and enforcement of password policies for controlling the passwords created by the customers for the customer devices, and advantages or potential advantages of supporting management and enforcement of password policies for controlling the passwords created by the customers for the customer devices, may be further understood by considering various aspects of such example embodiments within specific contexts (e.g., providing security for particular types of communication networks, using particular device management capabilities such as particular device management data models and particular device management protocols, using particular customer device management interfaces, or the like, as well as various combinations thereof), as discussed further below.

Various example embodiments may be configured to allow service providers of communication networks (e.g., Internet Service Providers (ISPs), Communication Service Providers (CSPs), or the like, as well as various combinations thereof) to support management and enforcement of password policies for customer devices of the communication networks (e.g., customer devices such as customer gateways and customer premises equipments (CPEs)), using password policies defined based on regular expressions and managed using device management capabilities (including representation of the password policies based on a device management data model (e.g., a Broadband Forum (BBF) data model such as a TR-98 data model, a TR-181 data model, or the like, as well as various combinations thereof) and configuration of the password policies onto customer devices using a device management protocol (e.g., TR-069, TR-369, or the like, as well as various combinations thereof)), for controlling passwords created by customers for the customer devices of the communication networks through a customer device management interface (e.g., a Web Graphical User Interface (WebGUI) interface or other suitable device management interfaces). It will be appreciated that these and various other example embodiments for supporting management and enforcement of password policies used for controlling password creation for customer devices of communication networks may provide improved management and enforcement of such password policies used for controlling password creation for customer devices of communication networks, thereby providing improved control over password creation for customer devices of communication networks and, thus, improved security for such communication networks. It will be appreciated that these and various other example embodiments for supporting management and enforcement of password policies used for controlling password creation for customer devices of communication networks, and advantages or potential advantages of supporting management and enforcement of password rules used for controlling password creation for customer devices of communication networks, may be further understood by considering various aspects of such example embodiments within specific contexts (e.g., providing security for particular types of communication networks, using particular types of password policy definition capabilities, using particular device management capabilities (e.g., particular device management data models and/or particular device management protocols), using particular customer device management interfaces, or the like, as well as various combinations thereof), as discussed further below.

Various example embodiments for supporting management and enforcement of password policies for customer devices, based on use of password policy definition capabilities and device management capabilities, may be configured to provide security for various types of communication networks. For example, various example embodiments for supporting management and enforcement of password policies for customer devices, based on use of password policy definition and device management capabilities, may be used to provide security for customer devices of customer networks where the customer devices of the customer networks include customer gateways and CPEs served by the customer gateways. Customer gateways offer customers several capabilities (e.g., features, settings, or the like, as well as various combinations thereof) which may be used to manage their customer networks, including network configuration, security settings, and device management for the customer gateways and for the CPEs served by the customer gateways. One important aspect of security is enforcing strong password policies to protect against unauthorized access to the customer gateway and the CPEs served by the customer gateway. Password policies typically include password rules, which are a set of criteria and constraints imposed on users when creating passwords for devices (e.g., during initial password creation or during updating of existing passwords based on creation of new passwords). Password rules help ensure that passwords are sufficiently secure, making them more difficult to guess or crack and, thus, providing enhanced security for the devices at which the passwords are being set. For example, common password rules include requirements for minimum password length for passwords, requirements for the types and quantities of characters used in passwords (e.g., use of a combination of letters, numbers, and special characters), restrictions on common or easily guessable passwords or portions of passwords, or the like, as well as various combinations thereof. It will be appreciated that various example embodiments for supporting management and enforcement of password policies for customer devices, based on use of password policy definition capabilities and device management capabilities, may be configured to provide security for various other types of communication networks.

Various example embodiments for supporting management and enforcement of password policies for customer devices, based on use of password policy definition capabilities and device management capabilities, may be configured to support management and enforcement of password policies for customer devices using specific password policy definition capabilities in combination with various device management capabilities (e.g., device management data models and/or device management protocols). For example, the password policy definition capabilities may be used on use of regular expressions to define password rules of password policies. A regular expression is a pattern-matching mechanism used in computer science and programming to define and validate complex text patterns. Administrators of the service providers, by leveraging configurable regular expressions, gain greater control over the password rules in line with the security policies of the service providers that specify password requirements such as password length requirements, password character set requirements (e.g., quantities and types of characters, such as letters, numbers, and/or special characters), password complexity requirements, or the like, as well as various combinations thereof. The device management capabilities, including the device management data model and the device management protocols, serve as the framework for the service provider to manage and enforce the password policies including the password rules defined based on configurable regular expressions. The password policy definition capabilities and device management capabilities allow for relatively simple configuration of the password policies of the service provider and provisioning of the password policies of the service provider onto the customer devices for use in controlling creation of passwords on the customer devices, thereby supporting more robust and efficient definition and application of password policies of the service provider for use in controlling creation of passwords on the customer devices. It will be appreciated that various example embodiments for supporting management and enforcement of password policies for customer devices, based on use of password policy definition capabilities and device management capabilities, may be configured to support management and enforcement of password policies for customer devices using various other password policy definition capabilities in combination with various device management capabilities.

Various example embodiments for supporting management and enforcement of password policies for customer devices, based on use of password policy definition capabilities and device management capabilities, may be configured to support management and enforcement of password policies for customer devices using various password policy definition capabilities (e.g., configurable regular expressions) in combination with specific device management capabilities (e.g., device management data models and/or device management protocols based on BBF technical specifications or other suitable specifications). The BBF has developed a number of technical specifications, for management of customer devices of customer networks, that define device management data models for representing data used for management of the customer devices of the customer networks and that define device management protocols for management of the customer devices of the customer networks. For example, TR-98 and TR-181 are two technical specifications developed by the BBF that define device management data models for management of residential gateways and associated CPE devices. These BBF technical specifications, and the data models defined therein, may be augmented to permit service providers to define password policies based on their security requirements without needing any support from the customer device vendors. For example, a password policy data model may be defined within a data-model tree of a BBF device management data model (e.g., TR-98 or TR-181) in order to provide a mechanism by which service providers can define password policies based on their security requirements. For example, TR-069 and TR-369 are two technical specifications developed by the BBF that define device management protocols for management of residential gateways and associated CPE devices. These BBF technical specifications, and the data management protocols defined therein, may be used to support configuration of the password policies of the service providers to the customer devices for use in evaluation of passwords created on the customer devices of the customer networks. It will be appreciated that various example embodiments for supporting management and enforcement of password policies for customer devices, based on use of password policy definition capabilities and device management capabilities, may be configured to support management and enforcement of password policies for customer devices using various other device management capabilities (e.g., device management data models and/or device management protocols based on BBF technical specifications or other suitable technical specifications).

Various example embodiments for supporting management and enforcement of password policies for customer devices, based on use of password policy definition capabilities and device management capabilities, may be configured to support management and enforcement of password policies for customer devices where the passwords are created by the customer using a specific device management interface (namely, using WebGUI). WebGUI, which is an interface system that lets users interact with a device or application through a web browser, is used in various contexts, including within the context of customer networks for allowing users to interact with customer devices of the customer network (e.g., customer gateways, CPEs, and so forth). In many WebGUI implementations for CPEs, the password rules are pre-defined and cannot be customized by the service provider. These password rules are often based on standard security best practices and aim to strike a balance between security and usability; however, the password rules may not always align with the specific security requirements or preferences of the service provider, thereby causing the service provider to request that the CPE vendors release firmware supporting the desired password policies of the service provider. Some CPE vendors work with large numbers of service providers, each having its own unique password policy for creation of passwords on customer devices supported by the service providers, thereby resulting in large numbers of requests by the service providers to the CPE vendors for the CPE vendors to enable the CPEs to support the customized password policies of the service providers. In order to accommodate these various password policy customizations, the CPE vendors previously would release customized CPE firmware to each of the service providers to support the customized password policies of the service providers (consuming significant research and development (R&D) resources of the CPE vendors as well as operational effort by the CPE vendors, thereby putting a significant burden on CPE vendors). It will be appreciated that various example embodiments for allowing service providers to support management and enforcement of password rules may alleviate this burden on CPE vendors, thereby leading to improved operational efficiency and increased profitability for the CPE vendors. It will be appreciated that various example embodiments for supporting management and enforcement of password policies for customer devices, based on use of password policy definition capabilities and device management capabilities, may be configured to support management and enforcement of password policies for customer devices where the passwords are created by the customer using various other device management interfaces.

Various example embodiments may be configured to enable a service provider of a communication network that is supporting a customer network of a customer to support management and enforcement of password policies for customer devices of the customer network, for controlling passwords created by customers for the customer devices of the customer network, in a manner that may provide various benefits for the service provider, the customer of the customer network, and the customer device vendor(s) of the customer devices. For example, various example embodiments for management and enforcement of service provider password policies which control creation of the passwords by the customers for the customer devices, by enabling the service provider to force use of more stringent password policies on the customers during password creation, may enhance the security of the service provider communication network and the customer network (e.g., use of the more stringent password policies ensures creation of stronger passwords that make it less likely that customer devices of the customer network are compromised and, thus, also less likely that the service provider communication network is compromised). For example, various example embodiments for management and enforcement of service provider password policies which control creation of the passwords by the customers for the customer devices may enhance the security of the service provider communication network and the customer network while also improving the operational efficiency of the service provider and the customer device vendor(s) by allowing the service provider to efficiently and dynamically manage and enforce more stringent password policies without involving the customer device vendor(s) in the process (e.g., without requiring the service provider to engage with each of the customer device vendors in order to request that the customer device vendors perform firmware upgrades on the customer devices in order to support the customized service provider password policies and, similarly, without requiring the customer device vendors to develop and release customized customer device firmware to the service provider in order to support the customized service provider password policies). It will be appreciated that various example embodiments for enabling a service provider of a communication network that is supporting a customer network of a customer to support management and enforcement of password policies for customer devices of the customer network, for controlling passwords created by customers for the customer devices of the customer network, may provide various other benefits for the service provider, the customer of the customer network, and/or the customer device vendor(s) of the customer devices.

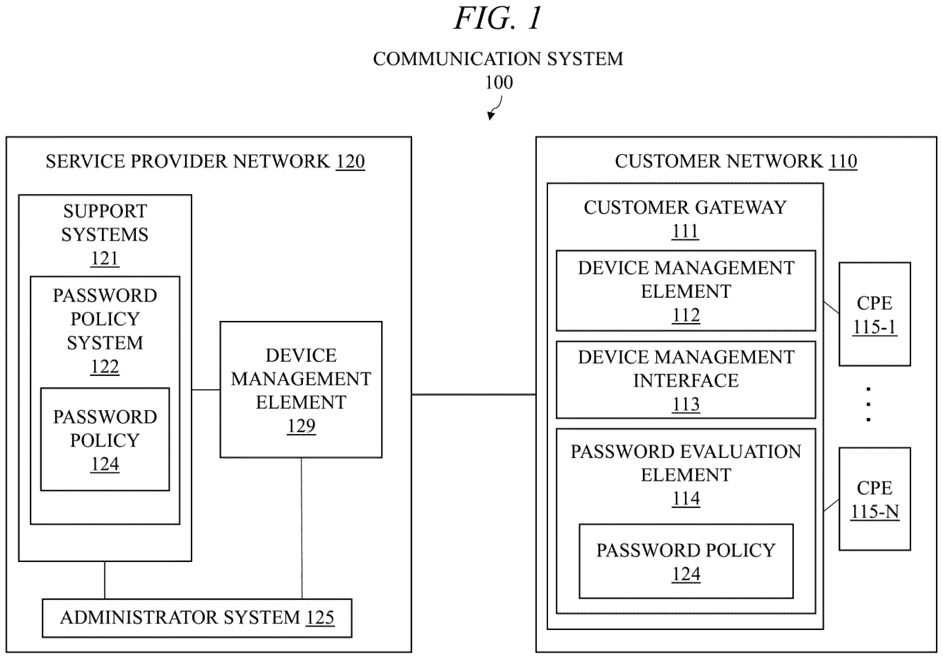

It will be appreciated that these and various other example embodiments for supporting management and enforcement of password policies for controlling creation of passwords for customer devices of communication networks, and advantages or potential advantages of supporting management and enforcement of password policies for controlling creation of passwords for customer devices of communication networks, may be further understood by considering various aspects of such example embodiments within the context of an example communication system as depicted in FIG. 1.

FIG. 1 depicts an example embodiment of a communication system configured to support management and enforcement of password policies, for controlling passwords of customer devices, based on use of regular expressions and device management capabilities.

The communication system 100 includes a customer network 110 and a service provider network 120. The customer network 110 is a network of a customer, which is a customer of a service provider which operates the service provider network 120. The customer network 110 supports communications of the customer, enabling various customer devices of the customer to access the Internet via the service provider network 120. The service provider network 120 supports communications of the customer network 110, including downstream communications to the customer network 110 and upstream communications from the customer network 110. The service provider network 120 may support communications of the customer network 110 based on various access technologies (e.g., wireless, optical fiber, cable, digital subscriber line, or the like, as well as various combinations thereof), various core communications technologies, and so forth. The service provider network 120 also supports management of the customer network 110 for supporting communication services for the customer network 110. As discussed further below, the communication system 100 is configured to support management and enforcement of password rules enforced by the service provider of the service provider network 120 on passwords created by the customer of the customer network 110 for customer devices of the customer network 110.

The customer network 110, as indicated above, is a network of a customer of the service provider of the service provider network 120. The customer network 110 may be associated with a residential location, a business location, an enterprise location, or the like. The customer network 110 includes a customer gateway 111 and a set of customer premises equipments (CPEs) 115-1 to 115-N (collectively, CPEs 115). The customer gateway 111 is configured to operate as a gateway of the customer network 110 for the CPEs 115, supporting communications between the CPEs 115 and the service provider network 120. For example, the customer gateway 111 may be a residential gateway where the customer network 110 is a residential network, a business gateway where the customer network 110 is a business network, or the like. The CPEs 115 may be any end devices of the customer which may be deployed as part of the customer network 110 and communicate via the customer gateway 111. For example, the CPEs 115 may be computers (e.g., desktops, laptops, tablets, or the like), set top boxes, smart televisions, smart appliances, Internet-of-Things (IoT) devices, or the like, as well as various combinations thereof. The customer network 110, as illustrated in FIG. 1, is configured to support management and evaluation of password rules enforced by the service provider of the service provider network 120 on the customer of the customer network 110. It will be appreciated that the customer network 110 may include various other devices, elements, functions, or the like.

The service provider network 120, as indicated above, is a network of the service provider which provides communication services for the customer network 110. The service provider network 120 may be associated with various types of service providers which may support the customer network 110, such as ISPs, CSPs, or the like. The service provider network 120 includes support systems 121, an administrator system 125, and a device management element 129. The support systems 121 are configured to support management of the customer network 110, including support for configuration of the customer network 110, monitoring of the customer network 110, or the like, as well as various combinations thereof. For example, the support systems 121 may include business support systems, operations support systems, or the like, as well as various combinations thereof. The administrator system 125 is configured to enable administrators of the service provider to perform various administrative operations for supporting management of the customer network 110 by supporting interaction by the administrators of the service provider with the support systems 121 and the device management element 129. The device management element 129 is configured to support management of customer devices of the customer network 110 (including the customer gateway 111 and the CPEs 115), using information available from the support systems 121, in a manner for supporting various management tasks (e.g., device configuration, firmware updates, security control, and so forth). The device management element 129 is configured to support management of devices of the customer network 110, using information available from the support systems 121, based on device management capabilities that include device management data models (e.g., BBF data models such as TR-98, TR1-181, or the like, or other suitable device management data models configured to support device management by the service provider for the customer network 110) and device management protocols (e.g., BBF protocols such as TR-069, TR-369, or the like, or other suitable device management protocols configured to support device management by the service provider for the customer network 110). It will be appreciated that the service provider network 120 may include various other systems, elements, functions, or the like.

The communication system 100 is configured to support management and enforcement of password policies, for enabling the service provider of the service provider network 120 to control setting of passwords for customer devices of the customer network 110, using configurable regular expressions and BBF-based data management capabilities. The password policies are configured by the service provider of the service provider network 120 to ensure that passwords set by the customer of the customer network 110 for customer devices of the customer network 110 satisfy the password requirements of the service provider of the service provider network 120. The password policies are configured by the service provider of the service provider network 120 using regular expressions to define the password policies (e.g., to define the password rules of which the password policies are composed) and using a BBF device management data model (e.g., TR-98, TR-181, or the like) to represent the password policies (e.g., representing regular expressions, which define the password rules of the password policies, as string objects in the BBF device management data model). The password policies configured by the service provider of the service provider network 120 are maintained on the service provider network 120 using the BBF device management data model and provisioned from service provider network 120 into the customer network 110 (e.g., on the customer gateway 111) using a BBF device management protocol (e.g., TR-069 through an Automatic Configuration Server (ACS), TR-369 through a User Services Platform (USP) element, or the like). The password policies provisioned on the customer network 110 by the service provider network 120 are used at the customer network 110 to evaluate passwords specified by the customer of the customer network 110 for customer devices of the customer network 110 via a device management interface supported by the customer devices of the customer network (e.g., WebGUI or the like). In this manner, the service provider of the service provider network 120 is able to enforce its password policies on customer devices of the customer network 110 in a manner for ensuring that passwords set by the customer of the customer network 110 satisfy the password requirements of the service provider of the service provider network 120. It will be appreciated that various aspects of such password control by the service provider of the service provider network 120 on passwords created by the customer of the customer network 110 may be further understood by considering specific elements of the communication system 100 configured to support management and enforcement of password policies using configurable regular expressions and BBF-based data management capabilities.

The communication system 100 is configured to support management of password policies, for enabling the service provider of the service provider network 120 to control setting of passwords for customer devices of the customer network 110, using configurable regular expressions and BBF-based data management capabilities. The service provider network 120 is configured to support management of password policies using configurable regular expressions and BBF-based data management capabilities. The support systems 121 of the service provider network 120 include a password policy system 122. The password policy system 122 is configured to support a password policy 124 of the service provider. The password policy 124 of the service provider is configured for use to determine whether or not passwords satisfy a set of password requirements of the service provider. The password policy 124 of the service provider may be composed of a set of password rules which may be evaluated to determine whether passwords satisfy the password policy 124. The password policy 124 of the service provider may be configured on the password policy system 122 by one or more service provider administrators via the administrator system 125 (e.g., defining the password rules to be included in the password policy 124, defining configurable regular expressions that specify the password rules included in the password policy 124, representing the password policy 124 within the context of a BBF-based device management data model, and so forth). The password policy 124 of the service provider may be maintained by password policy system 122 so as to make the password policy 124 available for use in configuring the customer network 110 to apply the password policy 124 within the context of password creation within the customer network 110. The password policy 124 of the service provider may be provisioned onto the customer network 110 by the device management element 129 based on interaction by the device management element 129 with the password policy system 122. The customer network 110 is configured to support management of the password policy 124 of the service provider based on support for configuration of the password policy 124 of the service provider onto the customer network 110 for use within the customer network 110 to evaluate passwords created by the customer for customer devices of the customer network 110.

The password policy 124 specifies a set of password requirements of the service provider that are to be imposed on the customer of the customer network 110 when creating passwords for customer devices of the customer network 110 (e.g., during initial password creation or during updating of existing passwords based on creation of new passwords). The password requirements of the password policy 124 may include various criteria and constraints to be imposed on the customer of the customer network 110 when creating passwords for customer devices of the customer network 110. The password policy 124 may be defined using a set of password rules which may specify the password requirements (e.g., each of the password rules of which the password policy 124 is composed may specify one or more criteria and/or constraints to be satisfied by passwords in order for the passwords to be accepted). The password policy 124 helps to ensure that passwords created for customer devices of the customer network 110 are sufficiently secure, making the passwords more difficult to guess or crack and, thus, providing increased security for the customer devices of the customer network 110 and, therefore, for the service provider network 120 which is communicatively connected to the service provider network 120.

The password rules of the password policy 124 of the service provider may include various types of password rules which may be enforced for password creation. For example, the password rules may include requirements for minimum password length for passwords (e.g., at least eight characters, at least ten characters, or the like). For example, the password rules may include requirements for the types and quantities of characters used in passwords (e.g., use of a combination of letters, numbers, and special characters). For example, the password rules may include a rule that passwords must include at least one lowercase letter, at least one uppercase letter, and at least one digit. For example, the password rules may include a rule that passwords must include at least one lowercase letter, at least one uppercase letter, at least one digit, and at least one special character. For example, the password rules may include a rule specifying a restriction on use of common or easily guessable passwords or portions of passwords (e.g., excluding passwords including the word "password", excluding passwords with repeating characters or well-known sequences of characters (e.g., "12345", "abcde", or the like), and so forth). It will be appreciated that the password rules of the password policy 124 defined on the password policy system 122 may include various other types of password rules which may be enforced for password creation.

The password rules of the password policy 124 may be defined by the service provider using regular expressions. A regular expression is a pattern-matching mechanism used in computer science and programming to define and validate complex text patterns. The administrators of the service provider network 120 may leverage configurable regular expressions to gain greater control over the password rules of the service provider by defining configurable regular expressions that specify the password rules. For example, Table 1 below provides an example of a set of password rules, and the corresponding regular expressions that are defined to specify the password rules, which may be used as the password policy 124. It will be appreciated that the password rules specified in Table 1 are merely one example of a set of password rules which may be used as the password policy 124 (e.g., fewer or more password rules may be included within the password policy 124, different definitions of these password rules may be included within the password policy 124, different types of password rules may be included within the password policy 124, or the like, as well as various combinations thereof).

**Table 1**

| **Password Rule** | **Regular Expression** |
|---|---|
| Minimum length of 8 characters | ^.{ 8,} $ |
| At least one uppercase letter, one lowercase letter, and one digit | ^(?=.*[a-z])(?=. *[A-Z])(?=.*\d).+$ |
| At least one uppercase letter, one lowercase letter, one digit, and one special character | ^(?=.*[a-z])(?=. *[A-Z])(?=.*\d)(?=.*[!@#$%"&*()]).+$ |
| Exclude passwords containing the word "password" | ^(?!.*password).+$ |
| Exclude passwords with repeating characters | ^(?!.*(.)\1).+$ |

The password rules of the password policy 124, as indicated above and illustrated in Table 1, are defined using regular expressions (illustratively, each password rule is defined using a regular expression, respectively). For example, a password rule that requires passwords to have a minimum length of eight characters may be defined using the following regular expression: "^.{8,}$". For example, a password rule that requires passwords to have at least one uppercase letter, one lowercase letter, and one digit may be defined using the following regular expression: "^(?=.*[a-z])(?=.*[A-Z])(?=.*\d).+$". For example, a password rule that requires passwords to have at least one uppercase letter, one lowercase letter, one digit, and one special character may be defined using the following regular expression: "^(?=.*[a-z])(?=.*[A-Z])(?=.*\d)(?=.*[!@#$%"&*()]).+$". For example, a password rule that requires passwords to exclude the word "password" may be defined using the following regular expression: "^(?!.*password).+$." For example, a password rule that requires passwords to exclude passwords with repeating characters may be defined using the following regular expression: "^(?!.*(.)\1).+$". It will be appreciated, as indicated above, that various other password rules or combinations of password rules may be specified as part of the password policy 124 maintained on the password policy system 122.

The password policy 124 may be represented by the service provider using a device management data model. The device management data model may serve as a framework for the service provider to configure and enforce the password policy 124, including storing and managing the configurable regular expressions used to define the password policy 124 and, further, supporting relatively simple configuration and modification of the password rules of the password policy 124 for controlling creation of passwords for customer devices of the customer network 110 (including customization of the password rules of the password policy 124 based on configurable regular expressions without requiring modifications to the customer device firmware of the customer devices of the customer network 110). The device management data model used to represent the password policy 124 may be a standardized (vendor-independent) device management data model (e.g., a BBF-based device management data model such as TR-98, TR-181, or the like) or a vendor-specific data model. For example, the device management data model used to represent the password policy 124 may be a BBF-based device management data model that is configured to support remote management of customer devices, such as broadband gateways and CPEs, served by broadband gateways such as residential gateways (e.g., TR-98, TR-181, or the like).

The password policy 124, as indicated above, may be represented using a device management data model. The representation of the password policy 124 within the device management data model may be based on, for each of the password rules of the password policy, representation of the respective password rule using a respective string object that represents the respective regular expression defining that password rule, such that the password policy 124 may be composed of an array of the regular expressions (modeled as string) for the password rules of the password policy 124. The representation of the password policy 124 within the device management data model may be based on use of a password policy data model that is configured to support representation, or modeling, of password policies that include password rules defined using regular expressions. The password policy data model may be added to an existing device management data model (e.g., a standardized password policy data model added to a standardized device management data model or a vendor-specific password policy data model added to a vendor-specific data model) by augmenting the existing device management data model to support the password policy data model.

The password policy 124, as indicated above, may be represented using a password policy data model within a device management data model. The password policy data model is configured to support representation, or modeling, of password policies that include password rules defined using regular expressions. The representation of the password policy 124 within the password policy data model may be based on, for each of the password rules of the password policy, representation of the respective password rule using a respective string object that represents the respective regular expression defining that password rule, such that the password policy 124 may be composed of an array of the regular expressions (modeled as string) for the password rules of the password policy 124. The password policy data model may be specified using a path, where the path may be defined based on whether the password policy data model is a BBF-based device management data model (e.g., in which case the path may be specified as Device.Users.CredentialPolicies. {i}, or using any other suitable path) or a vendor specific data model (e.g., in which case the path may be specified as *Device. Users.X_VENDOR1-COM_WebGUIPasswordPolicy* where the password rules data model is specific to a vendor known as VENDOR1, or using any other suitable paths). It will be appreciated that, although primarily presented with respect to use of a single password policy data model to support representation of password policies including password rules defined using regular expressions, in at least some example embodiments multiple password policy data models may be designed and deployed to support representation of password policies including password rules defined using regular expressions.

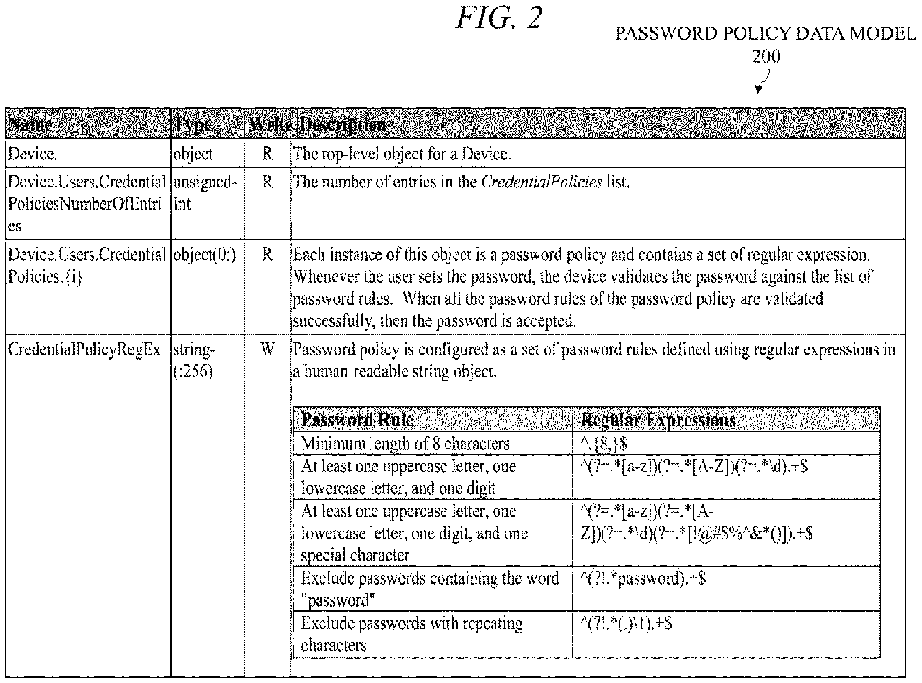

The password policy 124, as indicated above, may be represented using a password policy data model which forms part of a device management data model such as a standardized device management data model (e.g., a BBF-based device management data model such as TR-98, TR-181, or the like) or a vendor-specific data model. An example embodiment for representation of the password policy 124 (defined to include the set of password rules as specified in Table 1), based on augmentation of BBF-based device management data model to include a password policy data model, is presented in FIG. 2. As illustrated in FIG. 2, the password policy data model 200 includes a top-level object for a device, a number of entries object indicative of number of entries, a password policy object, and a string that specifies a set of password rules defined using a set of regular expressions (illustratively, in the example of Fig. 2, including the password rules and associated regular expressions defined in Table 1). It will be appreciated that the representation of the password policy 124 within a device policy data model portion of a standardized device management data model may be provided in various other ways. It will be appreciated that representation of the password policy 124 using vendor-specific device management data models may be implemented in various ways which may vary across different vendors.

The password policy 124 of the service provider, defined using regular expressions to specify the password rules and represented using the BBF device management data model, is provided from the service provider network 120 to the customer network 110 based on BBF-based device management capabilities. The device management element 129, based on such BBF-based device management capabilities, automatically accesses the password policy 124 of the service provider from the password policy system 122 and automatically provisions the password policy 124 of the service provider into the customer network 110. The device management element 129 may automatically access the password policy 124 from the password policy system 122 and provision the password policy 124 into the customer network 110, based on representation of the password policy 124 using a BBF device management data model (e.g., TR-98, TR-181, or the like) and propagation of the password policy 124 using a BBF device management protocol (e.g., TR-069, TR-369, or the like), by enabling the device management element 129 to seamlessly access the password policy 124 from the password policy system 122 using the standardized data structure and efficiently convey the password policy 124 from the password policy system 122 to the customer network 110 by interacting with the BBF device management data model within the context of the BBF device management protocol. It will be appreciated that, in the example of FIG. 1, the device management element 129 of the service provider network 120 automatically provisions the password policy 124 of the service provider onto the customer gateway 111 of the customer network 110; however, it will be appreciated that the device management element 129 of the service provider network 120 also or alternatively may automatically provision the password policy 124 of the service provider onto one or more of the CPEs 115 of the customer network 110. In this manner, the password policy 124 of the service provider is configured within the customer network 110 for use within the customer network 110 to evaluate passwords specified by the customer of the customer network 110 for customer devices of the customer network 110.

The password policy 124 of the service provider, defined using regular expressions to specify the password rules and represented using the BBF device management data model, is received at the customer network 110 from the service provider network 120. As indicated above, in the example of FIG. 1, the password policy 124 of the service provider is automatically provisioned by the device management element 129 of the service provider network 120 onto the customer gateway 111 of the customer network 110. As indicated above, the provisioning of the password policy 124 of the service provider onto the customer gateway 111 of the customer network 110 is based on representation of the password policy 124 using a BBF device management data model (e.g., TR-98, TR-181, or the like) and propagation of the password policy 124 using a BBF device management protocol (e.g., TR-069, TR-369, or the like), which enables the device management element 129 to seamlessly access the password policy 124 from the password policy system 122 using the standardized data structure and efficiently convey the password policy 124 from the password policy system 122 to the customer network 110 by interacting with the BBF device management data model within the context of the BBF device management protocol. The customer gateway 111 of the customer network 110 receives the password policy 124 and stores the password policy 124 for use in evaluating passwords specified by the customer of the customer network 110 for customer devices of the customer network 110. In this manner, the password policy 124 of the service provider is configured within the customer network 110 for use within the customer network 110 to evaluate passwords specified by the customer of the customer network 110 for customer devices of the customer network 110.

The communication system 100 is configured to support enforcement of password policies, for enabling the service provider of the service provider network 120 to control setting of passwords for customer devices of the customer network 110, using configurable regular expressions and data management capabilities based on BBF technical specifications. The communication system 100 is configured to support enforcement of a password policy, for passwords entered by the customer of the customer network 110 for customer devices of the customer network 110, based on evaluation of passwords entered by the customer of the customer network 110 for customer devices of the customer network 110 using the password policy 124 of the service provider which is configured into the customer network 110 by the service provider network 120. The customer network 110 is configured to support evaluation of passwords entered by the customer of the customer network 110 for customer devices of the customer network 110, using the password policy 124 of the service provider, by supporting configuration of the customer gateway 111 to evaluate passwords entered by the customer of the customer network 110 for customer devices of the customer network 110 using the password policy 124 of the service provider. It is noted that, for purposes of clarity in describing various example embodiments for supporting evaluation of passwords based on the password policy 124 of the service provider, it is assumed in the following discussion that the customer is attempting to create a password for the customer gateway 111 of the customer network 110 (as opposed to for one or more of the CPEs 115 of the customer network 110).

The customer gateway 111 of the customer network 110 is configured to support enforcement of the password policy 124 of the service provider for creation of passwords for the customer gateway 111. The customer gateway 111 of the customer network 110 includes a device management element 112, a device management interface 112, and a password evaluation element 114. The device management element 112 is configured to support configuration of the password policy 124 of the service provider onto the customer gateway 111 by the device management element 129 of the service provider network 120 (e.g., based on use of the device management capabilities including the device management data model and the device management protocol) for use in evaluating passwords entered by the customer of the customer network 110 for the customer gateway 111 of the customer network 110. For example, the device management element 112 may be based on various BBF technical specifications for device management. The device management interface 113 is configured to support web-based access by the customer of the customer network 110 to the customer gateway 111 of the customer network 110 for enabling the customer to interact with customer devices of the customer network 110 (e.g., to create passwords for the customer devices of the customer network 110). For example, the device management interface 113 may be a WebGUI interface or other suitable type of customer-facing device management interface. The password evaluation element 114 is configured to evaluate passwords created by the customer for the customer gateway 111 via the device management interface 113, based on the password policy 124 of the service provider that is configured into the customer gateway 111 by the service provider network 120 via the device management interface 112, before setting the password for the customer gateway 111.

The customer gateway 111 receives the password policy 124 of the service provider from the service provider network 120. The customer gateway 111 receives the password policy of the service provider network 120 from the device management element 129 of the service provider network 120 via the device management element 112 of the customer gateway 111. The customer gateway 111 stores the password policy 124 of the service provider on the password evaluation element 114 of the customer gateway 111 for use by the password evaluation element 114 of the customer gateway 111 to evaluate passwords created by the customer for the customer gateway 111 using the device management interface 113 of the customer gateway 111. It will be appreciated that, although primarily presented with respect to storage of the password policy 124 of the service provider on the password evaluation element 114 of the customer gateway 111, the password policy 124 of the service provider may be maintained on the customer gateway 111 in various other ways while still being accessed by the password evaluation element 114 of the customer gateway 111 to evaluate passwords created by the customer for the customer gateway 111 using the device management interface 113 of the customer gateway 111.

The customer gateway 111 receives a password created by the customer for the customer gateway 111 via the device management interface 113. The customer of the customer network 110 accesses the device management interface 113 of the customer gateway 111 to perform various management functions for the customer devices of the customer network 110 (e.g., the customer gateway 111 and/or one or more of the CPEs 115). The customer of the customer network 110 may access the device management interface 113 of the customer gateway 111 from any suitable web browser or other suitable interface, which may be supported by any suitable end user device of the customer (e.g., one of the CPEs 115, one or more other end user devices of the customer which are not considered to be part of the customer network 110, or the like). The customer of the customer network 110 may access the device management interface 113 of the customer gateway 111 to initiate creation of a password for one of the customer devices of the customer network 110, where the creation of the password for one of the customer devices of the customer network 110 may be creation of an initial password for the one of the customer devices of the customer network 110, creation of a new password to replace an existing password of the one of the customer devices of the customer network 110, or the like. The customer of the customer network 110 may initiate the creation of the password for a customer device of the customer network 110 by providing the password to be used, such that the customer gateway 111 receives a password setting request including the password for the customer device of the customer network 110, and the password may then be evaluated by the password evaluation element 114 of the customer gateway 111.

The customer gateway 111 evaluates the password created by the customer for the customer gateway 111 via the device management interface 113, based on the password policy 124 of the service provider which is configured into the customer gateway 111 by the service provider network 120, before setting the password for the customer gateway 111. The password evaluation element 114 of the customer gateway 111 evaluates the password using the password policy 124 configured on the password evaluation element 114 by the service provider network 120. The customer gateway 111 evaluates the password specified by the customer for the customer gateway 111, based on the password policy 124, by evaluating the password against each of the password rules specified in the password policy 124 (which, as indicated herein, are defined using regular expressions). The password evaluation element 114 may evaluate the password, using the password rules defined using regular expressions, based on use of a regular expression evaluation engine to evaluate the password with respect to the regular expressions representing the password rules. The password evaluation element 114, based on whether the password satisfies the regular expression used to define a password rule, determines whether the password satisfies that password rule (namely, a determination that the password satisfied the regular expression means that the password satisfies that password rule of the password policy 124 and a determination that the password does not satisfy the regular expression means that the password does not satisfy that password rule of the password policy 124). The password evaluation element 114, based on whether the password satisfies the password rules of the password policy 124, determines whether the password satisfies the password policy 124 (namely, a determination that the password satisfied each of the password rules of the password policy 124 means that the password satisfies the password policy 124 and a determination that the password does not satisfy each of the password rules of the password policy 124 means that the password does not satisfy the password policy 124). It will be appreciated that the password evaluation element 114 may perform various other functions for evaluating the password specified by the customer for the customer gateway 111 with respect to the password policy 124 of the service provider provisioned on the customer gateway 111.

The customer gateway 111, based on a determination by the password evaluation element 114 that the password specified by the customer for the customer gateway 111 satisfies the password policy of the service provider (and, thus, is permitted to be set for the customer gateway 111), sets the password for the customer gateway 111. The determination that the password specified by the customer for the customer gateway 111 satisfies the password policy may be based on a determination that the password successfully satisfies each of the password rules of the password policy (or at least a threshold number of the password rules of the password policy), based on evaluation of the associated regular expressions used to define the password rules of the password policy 124. The customer gateway 111, after the password is successfully set for the customer gateway 111, may provide an indication of the successful password setting to the customer via the device management interface 113 (e.g., by sending a password setting response including an indication that the result of the password setting attempt was that the password specified by the customer was successfully set for the customer gateway 111). It will be appreciated that, at this point, the password specified by the customer via device management interface 113 has been successfully set since the password satisfies the password policy 124 of the service provider of the service provider network 120 which provides communication services for the customer network 110.

The customer gateway 111, based on a determination by the password evaluation element 114 that the password specified by the customer for the customer gateway 111 does not satisfy the password policy of the service provider (and, thus, is not permitted to be set for the customer gateway 111), prevents setting of the password for the customer gateway 111 (e.g., if the password setting attempt is for setting an initial password for the customer gateway 111 then no password is set for the customer gateway 111, whereas if the password setting attempt is for changing an existing password for the customer gateway 111 then the existing password remains as the password for the customer gateway 111). The determination that the password specified by the customer for the customer gateway 111 does not satisfy the password policy may be based on a determination that the password fails to satisfy one or more of the password rules of the password policy (or at least a threshold number of the password rules of the password policy), based on evaluation of the associated regular expressions used to define the password rules of the password policy 124. The customer gateway 111, after the determination that the password is not permitted to be set for the customer gateway 111, may provide an indication of the unsuccessful password setting to the customer via the device management interface 113 (e.g., by sending a password setting response including an indication that the result of the password setting attempt was that the password specified by the customer was not successfully set for the customer gateway 111 due to a failure to satisfy one or more password rules of the service provider). It will be appreciated that, at this point, the password specified by the customer via the device management interface 113 has not been successfully set since the password does not satisfy the password policy 124 of the service provider of the service provider network 120 which provides communication services for the customer network 110.

It will be appreciated that, although primarily presented with respect to management and enforcement of the password policy of the service provider of the service provider network 120 on a particular customer device of the customer network 110 (namely, on the customer gateway 111) for evaluation of passwords entered for a particular customer device of the customer network (again, for the customer gateway 111), management and enforcement of the password policy of the service provider of the service provider network 120 may be performed on various other customer devices of the customer network 110 and/or evaluation of passwords may be performed for various other customer devices of the customer network 110 (e.g., the password policy of the service provider may be configured on the customer gateway 111 and used on the customer gateway 111 to evaluate passwords created for the CPEs 115 associated with the customer gateway 111, the password policy of the service provider may be configured on the CPEs 115 and used on the CPEs 115 to evaluate passwords created for the CPEs 115, or the like, as well as various combinations thereof).

It will be appreciated that, although primarily presented with respect to supporting management and enforcement of password policies based on use of specific data management capabilities that support remote management of devices (namely, data management capabilities that are based on BBF technical specifications, including BBF device management data models (e.g., TR-98, TR-181, or the like) and BBF device management protocols (e.g.. TR-069, TR-369, or the like)), various example embodiments for supporting management and enforcement of password policies may be provided based on use of other types of data management capabilities that support remote management of devices.

It will be appreciated that, although primarily presented with respect to supporting management and enforcement of password policies within a particular type of communication system (namely, within a communication system supporting communication services of a customer network such as a residential network or business network), various example embodiments for supporting management and enforcement of password policies may be applied within various other types of communication systems which utilize passwords for securing access to devices.

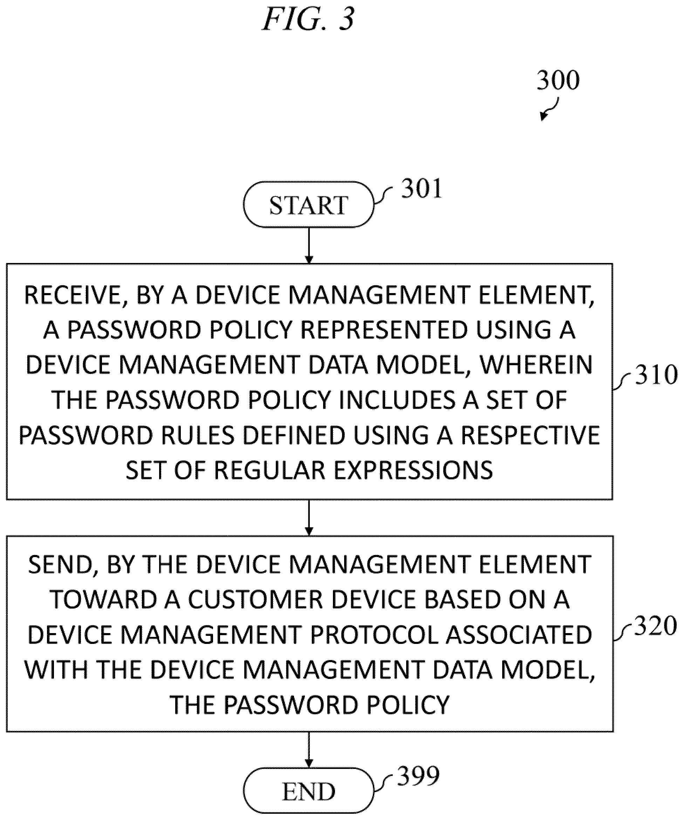

FIG. 3 depicts an example embodiment of a method for use by a device management element of a service provider network to support management and enforcement of a password policy, for controlling passwords of customer devices, based on use of regular expressions and device management capabilities. It will be appreciated that, although primarily presented as being performed serially, at least a portion of the functions of the method 300 may be performed contemporaneously or in a different order than as presented with respect to FIG. 3. At block 301, the method 300 begins. At block 310, receive, by a device management element, a password policy represented using a device management data model, wherein the password policy includes a set of password rules defined using a respective set of regular expressions. At block 320, send, by the device management element toward a customer device based on a device management protocol associated with the device management data model, the password policy. At block 399, the method 300 ends. It will be appreciated that various functions presented herein with respect to FIG. 1 may be incorporated within the context of method 300 of FIG. 3.

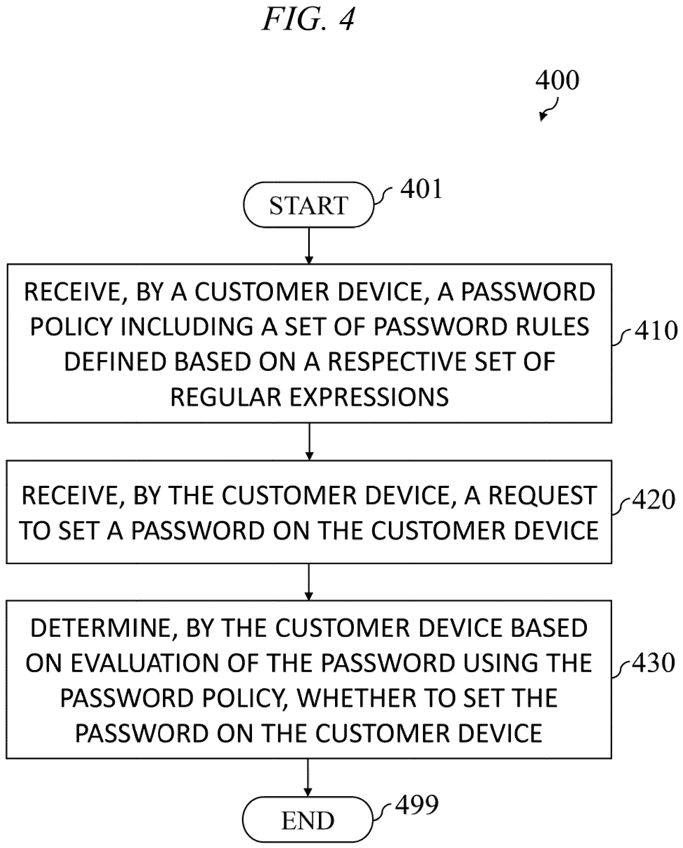

FIG. 4 depicts an example embodiment of a method for use by a customer device of a customer network to support management and enforcement of a password policy, for controlling passwords for the customer device, based on use of regular expressions and device management capabilities. It will be appreciated that, although primarily presented as being performed serially, at least a portion of the functions of the method 400 may be performed contemporaneously or in a different order than as presented with respect to FIG. 4. At block 401, the method 400 begins. At block 410, receive, by a customer device, a password policy including a set of password rules defined based on a respective set of regular expressions. At block 420, receive, by the customer device, a request to set a password on the customer device. At block 430, determine, by the customer device based on evaluation of the password using the password policy, whether to set the password on the customer device. At block 499, the method 400 ends. It will be appreciated that various functions presented herein with respect to FIG. 1 may be incorporated within the context of method 400 of FIG. 4.

Various example embodiments for supporting management and enforcement of password rules for customer devices may provide various advantages or potential advantages. For example, various example embodiments for supporting configuration and enforcement of password rules for customer devices may provide configurable regular expression-based password rules through a data model in a manner that supports more efficient configuration and enforcement of password rules for controlling setting of passwords for customer devices, thereby enhancing security for the customer devices without the need for support from the device vendors. For example, various example embodiments for supporting configuration and enforcement of password rules for customer devices may empower service providers to align the password rules with specific service provider security needs and preferences, providing a customization that enhances security by allowing service provider enforcement of more stringent password requirements, if desired, without the need for support from the customer device vendors. For example, various example embodiments for supporting configuration and enforcement of password rules for customer devices may, based on use of regular expressions that enable the definition of complex and adaptive password rules (where regular expressions can accommodate a wide range of patterns and constraints), allow for the creation of robust password policies that adapt to evolving security threats. For example, various example embodiments for supporting configuration and enforcement of password rules for customer devices may, based on use of a data model for supporting configuration and enforcement of password rules, provide a flexible and scalable platform for managing password rules across multiple users or devices, where changes to the password rules can be easily propagated and applied so as to ensure consistency and uniformity throughout the customer environment. For example, various example embodiments for supporting configuration and enforcement of password rules for customer devices may, based on introduction of configurable regular expression-based password rules through a data model, provide a significant advancement in service provider enforcement of customer network security, providing various benefits to the service providers (e.g., providing greater control, adaptability, and customization when it comes to enforcing strong password policies at the customer devices) and providing various benefits to customer device vendors (e.g., increasing the operational efficiency for device vendors by obviating the need for device vendors to react to service provider requests for changes to customer devices in order to be able to support enhanced security for the customer devices). It will be appreciated that various example embodiments for supporting configuration and enforcement of password rules for customer devices may provide various other advantages or potential advantages.

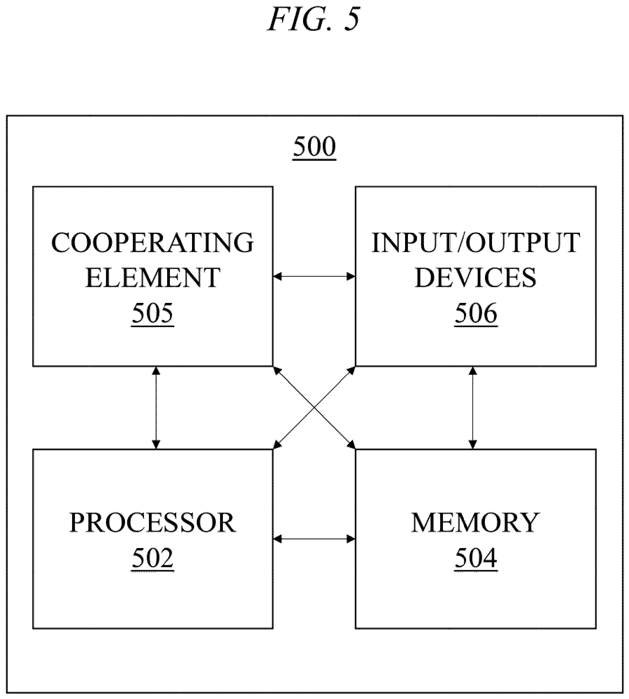

FIG. 5 depicts an example embodiment of a computer suitable for use in performing various functions presented herein.

The computer 500 includes a processor 502 (e.g., a central processing unit (CPU), a processor, a processor having a set of processor cores, a processor core of a processor, or the like) and a memory 504 (e.g., a random access memory (RAM), a read-only memory (ROM), or the like). In at least some example embodiments, the computer 500 may include at least one processor and at least one memory storing instructions that, when executed by the at least one processor, cause the computer to perform various functions presented herein.

The computer 500 also may include a cooperating element 505. The cooperating element 505 may be a hardware device. The cooperating element 505 may be a process that can be loaded into the memory 504 and executed by the processor 502 to implement various functions presented herein (in which case, for example, the cooperating element 505 (including associated data structures) can be stored on a non-transitory computer readable medium, such as a storage device or other suitable type of storage element (e.g., a magnetic drive, an optical drive, or the like)).

The computer 500 also may include one or more input/output devices 506. The input/output devices 506 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 500 may represent a general architecture and functionality suitable for implementing functional elements described herein, portions of functional elements described herein, or the like, as well as various combinations thereof. For example, the computer 500 may provide a general architecture and functionality that is suitable for implementing one or more elements presented herein. For example, the computer 500 may provide a general architecture and functionality that is suitable for implementing at least one of a service provider device or a portion thereof (e.g., a support system, a policy system, an administrator system an device management element, or the like), a customer device or a portion thereof (e.g., a customer gateway device such as a residential gateway, a customer CPE device, a device interface element, a device management interface, a password evaluation element, or the like), or the like, as well as various combinations thereof.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer readable media), transmitted via a data stream in a broadcast or other signal bearing medium, and/or stored within a memory within a computing device operating according to the instructions.

It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements.

It will be appreciated that, as used herein, the term "or" refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

## Claims

1. An apparatus comprising means for:
receiving, by a customer device, a password policy including a set of password rules defined based on a respective set of regular expressions;
receiving, by the customer device, a request to set a password on the customer device; and
determining, by the customer device based on evaluation of the password using the password policy, whether to set the password on the customer device.

2. The apparatus according to claim 1, wherein the password policy is received from a service provider network providing communication services for the customer device.

3. The apparatus according to any of claims 1 to 2, wherein the password policy is received based on a device management protocol.

4. The apparatus according to any of claims 1 to 3, wherein the password policy is received from a device management element.

5. The apparatus according to claim 4, wherein the device management element is an Automatic Configuration Server (ACS) or a User Services Platform (USP) element.

6. The apparatus according to any of claims 1 to 5, wherein the password policy is represented using a device management data model.

7. The apparatus according to claim 6, wherein the device management data model is a Broadband Forum data model.

8. The apparatus according to any of claims 1 to 7, wherein the request to set the password on the customer device is received via a device management interface.

9. The apparatus according to claim 8, wherein the device management interface is a customer-facing device management interface.

10. The apparatus according to any of claims 1 to 9, wherein the evaluation of the password using the password policy is based on a regular expression evaluation engine.

11. The apparatus according to any of claims 1 to 10, wherein the evaluation of the password using the password policy includes evaluation of the password with respect to each of the regular expressions to determine whether the password satisfies each of the password rules of the password policy.

12. The apparatus according to any of claims 1 to 11, wherein the apparatus further comprises means for:
permitting the password to be set on the customer device based on a determination that the password satisfies the password policy; or
preventing the password from being set on the customer device based on a determination that the password fails to satisfy the password policy.

13. The apparatus according to any of claims 1 to 12, wherein the customer device is a customer gateway device or a customer premises equipment device.

14. A method, comprising:
receiving, by a customer device, a password policy including a set of password rules defined based on a respective set of regular expressions;
receiving, by the customer device, a request to set a password on the customer device; and
determining, by the customer device based on evaluation of the password using the password policy, whether to set the password on the customer device.

15. An apparatus comprising means for:
receiving, by a device management element, a password policy represented using a device management data model, wherein the password policy includes a set of password rules defined using a respective set of regular expressions; and
sending, by the device management element toward a customer device based on a device management protocol associated with the device management data model, the password policy.
